Europäisches Patentamt

European Patent Office

Office européen des brevets

(11) Veröffentlichungsnummer: **0 189 543 B1**

(12) **EUROPÄISCHE PATENTSCHRIFT**

(45) Veröffentlichungstag der Patentschrift: **21.08.91**

(51) Int. Cl.⁵: **H01M 2/12**, H01M 10/52

(21) Anmeldenummer: **85114831.2**

(22) Anmeldetag: **22.11.85**

(54) **Mehrzelliger elektrischer Akkumulator mit kombinierter Abgastrocken- und Flammschutzvorrichtung.**

(30) Priorität: **30.01.85 DE 3503014**

(43) Veröffentlichungstag der Anmeldung:
**06.08.86 Patentblatt 86/32**

(45) Bekanntmachung des Hinweises auf die
Patenterteilung:
**21.08.91 Patentblatt 91/34**

(84) Benannte Vertragsstaaten:
**AT DE FR GB SE**

(56) Entgegenhaltungen:
**EP-A- 0 053 732          EP-A- 0 123 369
DE-A- 2 906 538          FR-A- 429 332
FR-A- 860 921            GB-A- 791 139
GB-A- 1 095 499          GB-A- 2 042 249
US-A- 2 331 450          US-A- 3 102 220
US-A- 4 087 592**

**CHEMICAL ABSTRACTS, Band 102, Nr. 4, Januar 1985, Seite 224, Zusammenfassung Nr. 28349u, Columbus, Ohio, US; R. SALTAT: "Nickel-iron battery system safety. Final report.", & REPORT 1984, DOE/CS/54209-19, JPL-9950-91**

(73) Patentinhaber: **VARTA Batterie Aktiengesellschaft
Am Leineufer 51
W-3000 Hannover 21(DE)**

(72) Erfinder: **Buder, Eckart, Dipl.-Phys.
Mitobiusweg 4
W-3057 Neustadt 1(DE)**
Erfinder: **Metz, Hans-Ulrich, Dipl.-Ing.
Alter Kirchweg 22
W-3252 Bad Münder(DE)**
Erfinder: **Übermeier, Dieter, Dipl.-Ing.
Hildesheimer Strasse 25
W-3000 Hannover 1(DE)**

(74) Vertreter: **Kaiser, Dieter Ralf, Dipl.-Ing.
Gundelhardtstrasse 72
W-6233 Kelkheim/Ts.(DE)**

**Beschreibung**

Die Erfindung betrifft einen mehrzelligen elektrischen Akkumulator, insbesondere eine Starterbatterie in einem Blockkasten, dessen einzelne Zellen über einen gemeinsamen, durch den Blockdeckel nach außen geführten Gaskanal entgasen, wobei das Gas vor seinem Austritt ins Freie durch Einrichtungen zum Flammschutz tritt.

Die Betriebsumstände solcher Akkumulatoren verbieten es oft, Gase aus einzelnen Zellen frei austreten zu lassen. Entweder liegen dafür Sicherheitsgründe vor oder einfach der Wunsch nach einer gesamtheitlichen Gasentsorgung der Batterie mit Ableitung der Gase zu einer definierten Stelle.

Nach dem deutschen Gebrauchsmuster 8003 869 ist bei einer 6-zelligen Akkumulatorenbatterie jede Zelle mit einer Entlüftungsöffnung versehen und dieser wiederum ein individueller, geschlossener Entlüftungskanal zugeordnet, welcher parallel zu den Kanälen der anderen Zellen im Blockdeckel verläuft und erst an einer Seite des Deckels in ein allen Kanälen gemeinsames feinporiges Filterstück mit einer nachgeschalteten Gasauslaßkammer einmündet.

Ein solches Entgasungssystem ist geeignet, Entzündungen bzw. Explosionen des in der Batterie enthaltenen Knallgases durch Zündung von außen und auch ein Über-greifen derartiger Entzündungen von einer Zelle zur anderen zu verhindern, mit dem Nachteil, daß sich das Filterstück mit Elektrolytpartikelchen aus den Überladegasen zusetzen kann.

Als ein Beispiel für eine andere Ausführungsform einer "Zentralentgasung" sei die aus der DE-OS 23 58 417 bekannte Mehrzellen-Batterie genannt, die gattungsmäßig dem erfindungsgemäßen Akkumulator am nächsten kommt. Dort können die einzelnen Gasräume der Zellen durch kleine Öffnungen, die in die Zellentrennwände oberhalb des Elektrolytspiegels eingebracht sind, oder über ein zentrales, durch die Trennwände hindurchverlegtes Rohr mit kleinen Öffnungen zu jeder Zelle untereinander kommunizieren. In beiden Fällen stellt der oberhalb des Elektrolytspiegels vorhandene Raum eine Entgasungskammer dar, wobei die Gasabführung nach draußen durch einen Schlauchanschluß am Deckel bzw. durch das genannte, nur an einem Ende offene Rohr erfolgt.

Die zentrale Entgasung an sich kann nicht verhindern, daß mit den Batteriegasen Säurenebel ausgetragen werden. Mit einer Schlauchleitung, welche die Nebel zu einem weniger gefährdeten Ort wegführt, wäre eine in Fahrzeugen verwendete kompakte Starterbatterie jedoch umständlicher zu handhaben. Außerdem ist die Gefahr, daß durch in der Nähe der Batterie gebildete Funken oder Flammen Knallgasexplosionen ausgelöst werden, gerade wegen des massierten Gasangebots an der zentralen Austrittsstelle eher vergrößert, weshalb eine Abschließung derselben durch eine Flammenschutzvorrichtung, z. B. mittels einer Fritte, zu den bereits bekannten und praktizierten Maßnahmen zählt. Die Fritte ihrerseits ist mit dem Nachteil behaftet, daß kondensierte Feuchtigkeit ihre Poren allmählich verstopft, so daß durch Blockierung des Gasaustritts sich in der Batterie ein unzulässig hoher Druck aufbaut.

Ein aus der EP-A-123 369 bekannter mehrzelliger Akkumulator besitzt eine Entgasungseinrichtung, die in vollem Umfang in die Deckelkonstruktion integriert ist und an ihrer Ausmündung ins Freie ein Kammersystem mit einem vorgeschalteten Frittenfilter der erwähnten Art aufweist. Durch diese Flammschutzmaßnahme wird die Bildung einer stehenden Flamme verhindert. Der Filter wird von einem mit Säurenebeln belasteten Gasstrom angeströmt der die gröbsten Mengen an mitgerissener Feuchtigkeit vorher abgegeben hat. Diese sammeln sich nämlich in kammerartigen Elektrolytfallen oberhalb jeder Einzelzelle an und fließen von dort unter dem Einfluß der Schwerkraft in die Zellen zurück.

Der Erfindung liegt daher die Aufgabe zugrunde, einen mehrzelligen Akkumulator mit zentraler Entgasungseinrichtung verfügbar zu machen, bei welchem ein Säureaustritt nicht stattfindet, der über einen wirksamen Explosionsschutz verfügt, wobei auch Zündungen der Ladegase von außerhalb der Batterie, welche die Entflammung nach innen tragen, verhindert werden, und bei welchem die Möglichkeit eines Gasstaus weitgehend ausgeschlossen ist.

Die Aufgabe wird erfindungsgemäß mit den im kennzeichnenden Teil des Anspruchs 1 angegebenen Maßnahmen gelöst.

Ein wesentlicher Vorteil der Erfindung liegt darin, daß alle für das gefahrlose Funktionieren einer Zentralentgasung notwendigen Vorkehrungen ohne nennenswerten Platzbedarf, z. B. im Außenbereich des Batteriegehäuses, getroffen werden, so daß die Batterie an ihrem ursprünglichen Einsatzort ohne Umrüsten, etwa auf eine andere Halterung, weiter verwendet werden kann.

Die Erfindung wird im folgenden anhand einer Figur näher erläutert.

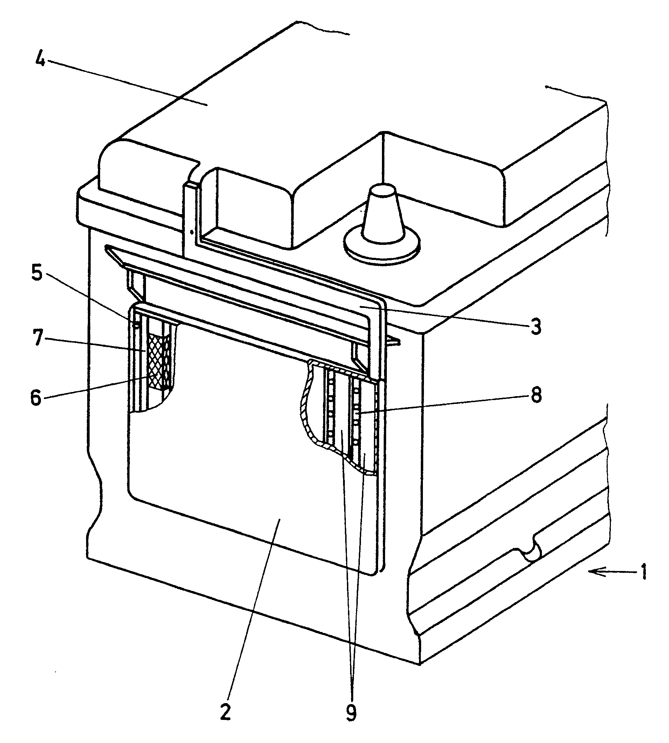

Die Figur zeigt eine erfindungsgemäße Starterbatterie 1 mit einem erkerartig an einer Seitenwand des Blockkastens angeordneten Behältnis 2. Wie ersichtlich, wird der Gehäuseumriß und damit die Kompaktheit der Batterie durch das Behältnis kaum berührt. Es nimmt über einen Verbindungskanal 3 die unter dem Blockdeckel 4 gesammelten Gase auf und entlüftet durch einen Gasaustritt 5, nachdem die Gase bei ihrem Durchgang zunächst eine Trocknung erfahren und danach eine Flammschutzvorrichtung 6 passiert haben. Entsprechend ist das Behältnis innen zumindest in zwei hintereinanderliegende Räume, in Durchstömungsrichtung gesehen, aufgeteilt, von denen der erste Raum Mittel zur Säureabscheidung und Sammlung mit dem Ziel der Feuchtigkeitsentfernung enthält, während der zweite Raum zur Aufnahme von Flammschutzmitteln vorgesehen ist, wobei sich der eigentlichen Schutzeinrichtung gasaustrittsseitig noch eine Flammenlöschkammer 7 anschließt.

Als eine wirksame Maßnahme zum Trocknen von Gasen hat sich das wiederholte Umlenken des Gasstromes an Hindernissen erwiesen. Die mitgeführten Flüssigkeitströpfchen vermögen aufgrund ihrer Trägheit dem raschen Richtungswechsel nicht zu folgen, prallen ab und schlagen sich am Boden des Behältnisses nieder. Geeignete Mittel zur Feuchtigkeitsentfernung stellen daher im vorderen Teil des Behältnisses quer in den Gasraum gestellte Wände 8, die auch perforiert sein können, dar. Das Behältnis weist dadurch gegebenenfalls eine ganze Serie von Kammern 9 auf. Die Wände können erfindungsgemäß ersetzt oder ergänzt werden durch eine Flüssigkeitsvorlage mit einer nicht verdunstenden Flüssigkeit, die andererseits keine zu hohe Viskosität besitzen darf, damit das Gas leicht hindurchperlt. Dabei werden Säurepartikel, soweit sie nicht bereits von den Spritzfängern in den Zellen zurückgehalten wurden, abgetrennt.

Das hierdurch entfeuchtete Gas kann nunmehr die Flammschutzvorrichtung 6 im zweiten Raum anströmen, die vorzugsweise eine Fritte aus sinterporösem Kunststoff ist, ohne daß Gefahr einer Durchnässung des Porensystems bis zum Dichtsetzen und mit der unerwünschten Folge eines Gasstaus besteht.

Zwischen der Fritte 6 und dem Gausaustritt 5 befindet sich erfindungsgemäß die sogenannte Flammenlöschkammer 7. Diese hält schädliche äussere Einflüsse von der Fritte fern; ihre eigentliche Funktion, für welche ihr Volumen ebenso wie die Gasaustrittsöffnung entsprechend ausgelegt sind, ist jedoch die, daß sie bei einer äußeren Zündung der Ladegase die batteriewärts zurückeilende Flammenfront auffängt und die Gase zu einem schlagartigen Abbrennen veranlaßt. Auf diese Weise wird die Ausbildung einer stehenden Flamme an der Frittenaußenseite, verbunden mit der Gefahr des Durchbrennens, verhindert, und die Ausbreitung der Zündung bis zum Verbindungskanal und in das Batterieinnere ist nicht mehr möglich. Dabeit tritt außerdem die erwähnte, im Zwangsweg der Gase liegende Flüssigkeitsvorlage als Flammsperre in Funktion und gewährleistet sogar dann einen Flammenabbruch, wenn der zuletzt beschriebene Mechanismus versagen sollte.

Besonders günstig ist es daher, wenn die Flammschutzvorrichtung aus einer Kombination der Fritte mit einem porösen Metallkörper als Mittel zur raschen Wärmeableitung besteht, welcher der Fritte an ihrer Gaseintrittsseite vorgelagert ist. Das Mittel kann ein poröses Sintermaterial oder eine in das Behältnis eingebrachte Schüttung metallischer Partikel, z. B. Metallspäne, sein. Geeignet sind auch ein Schaummetall, ein Metallvlies oder Stahlwolle. Gegebenenfalls ist jedes dieser Mittel auch ersatzweise anstelle der Fritte in Gestalt eines ent-spechenden Formkörpers verwendbar. Die Poren-größe der Metallkörper ist zweckmäßig so bemessen, daß die im Gas noch vorhandene Feuchtigkeit durch Oberflächenadsorption auskondensiert und sich so eine gastrocknende Wirkung ergibt.

Das Behältnis bietet sich schließlich in vorteilhafter Weise zur Unterbringung eines Gassensors gemäß deutscher Patentanmeldung P 34 14 664 an,. wenn man diesen an einer Stelle plaziert, wo das hindurchströmende Gas bereits von Säurepartikeln befreit und entfeuchtet ist. Bei diesem Sensor handelt es sich um ein temperaturempfindli-ches elektronisches Bauelement, beispielsweise ei-nen handelsüblichen NTC- oder PTC-Widerstand, der oberflächlich mit einem die Wasserstoffrekombination katalysierenden Material, z. B. eine PTFE-gebundene Palladium/Aktivkohlemischung, beschichtet ist. Der Widerstand reagiert auf den Temperaturanstieg, welcher mit der Gasrekombination am Katalysator einhergeht, sobald die Akkumulatorgase am Ende einer Ladung sich mit der stöchio-metrischen Zusammensetzung des Knallgases ent-wickeln. Die Widerstandsänderung liefert dann ein elektrisches Signal zur Anzeige des Voll-ladezustandes bzw. zum Abschalten des Ladestromes.

## Patentansprüche

1. Mehrzelliger elektrischer Akkumulator, insbesondere Starterbatterie, in einem Blockkasten, dessen einzelne Zellen über einen gemeinsamen, durch den Blockkastendeckel nach außen geführten Gaskanal entgasen, wobei das gesammelte Gas vor seinem Austritt ins Freie durch Einrichtungen zum Flammschutz tritt, dadurch gekennzeichnet, daß an einer Seitenwand des Blockkastens ein über einen Verbindungskanal 3 mit dem Blockdeckel 4 verbundenes Behältnis 2 für das Gas mit, in Durch-strömungsrichtung gesehen, zwei hintereinan-derliegenden Innenräumen angeordnet ist, von denen der erste Innenraum Mittel zur Säureabscheidung enthält und der letzte Innenraum eine von dem entfeuchteten Gas angeströmte Flammschutzvorrichtung (6) in Form eines porösen gasdurchlässigen Körpers aus Metall oder Kunstoff der auf seiner Gasaustrittsseite im porösen Metallkörper vorgelagert ist sowie eine an ihre Gasaustrittsseite anschließende Flammenlöschkammer (7) als Flammschutzmittel aufweist.

2. Akkumulator nach Anspruch 1, dadurch gekennzeichnet, daß zur Säureabscheidung quer in den Gasstrom gestellte, gegebenenfalls perforierte, und somit sein Umlenken erzwingende Wände (8) vorgesehen sind.

3. Akkumulator nach Anspruch 1, dadurch gekennzeichnet, daß zur Säureabscheidung eine Flüssigkeitsvorlage vorgesehen ist.

4. Akkumulator nach den Ansprüchen 2 und 3, dadurch gekennzeichnet, daß die den Gasstrom umlenkenden Wände mit einer Flüssigkeitsvorlage kombiniert sind.

5. Akkumulator nach einem der Ansprüche 1 bis 4, daduch gekennzeichnet, daß die Flammschutzvorrichtung von einem porösen Sintermetall oder einer Schüttung metallischer Partikel gebildet ist.

6. Akkumulator nach einem der Ansprüche 1 bis 4, dadurch gekennzeichnet, daß die Flammschutzvorrichtung aus einem Schaummetall gebildet ist.

7. Akkumulator nach einem der Ansprüche 1 bis 4, dadurch gekennzeichnet, daß die Flammschutzvorrichtung aus einem Metallvlies gebildet ist.

8. Akkumulator nach einem der Ansprüche 1 bis 7, dadurch gekennzeichnet, daß an einer Stelle in dem Behältnis, an der das hindurchströmende Gas bereits von Säurepartikeln befreit und entfeuchtet ist, ein Gassensor zur Anzeige des Volladezustandes angeordnet ist.

## Claims

1. Multicell electric accumulator, in particular starter battery, in a block case, whereof individual cells degas via a joint gas channel guided outwards through the block case cover, the accumulated gas passing through antiflame devices before exiting into the atmosphere, characterised in that there is arranged on one side wall of the block case a container 2, which is connected via a connecting channel 3 to the block cover 4, for the gas with two inner chambers lying one behind the other as seen in through-flow direction, whereof the first inner chamber contains means for acid deposition and the last inner chamber has an antiflame device (6), against which the dehumidified gas flows, in the form of a porous gas-permeable body made of metal or synthetic material in front of which a porous metal body is mounted on its gas exit side, and also has a flame extinguishing chamber (7) as anti-flame means, on its gas exit side.

2. Accumulator in accordance with Claim 1, characterised in that for acid deposition there are provided walls (8) placed across the gas flow, perforated as the case may be, and thus forcing it to alter direction.

3. Accumulator in accordance with Claim 1, characterised in that for acid deposition a liquid reservoir is provided.

4. Accumulator in accordance with Claims 2 and 3, characterised in that the walls altering the direction of the gas flow are combined with a liquid reservoir.

5. Accumulator in accordance with Claims 1 to 4, characterised in that the anti-flame device is formed from a porous sintered metal or an accumulation of metal particles.

6. Accumulator in accordance with one of Claims 1 to 4, characterised in that the anti-flame device is formed from a foam metal.

7. Accumulator in accordance with one of Claims 1 to 4, characterised in that the anti-flame device is formed from a metal fleece.

8. Accumulator in accordance with one of Claims 1 to 7, characterised in that a gas sensor for indicating the fully charged state is arranged at a point in the container at which the gas flowing through is already free of acid particles and is dehumidified.

## Revendications

1. Accumulateur électrique à plusieurs éléments, notamment batterie de démarrage, dans un bac monobloc, et dont les différents éléments sont dégazés par l'intermédiaire d'un canal de gaz commun allant vers l'extérieur à travers le couvercle de bac monobloc, le gaz ainsi rassemblé passant, avant sa sortie à l'air libre, par des dispositifs pare-flammes, accumulateur caractérisé en ce que, contre une paroi latérale du bac monobloc, est disposé un récipient (2) pour le gaz, qui est relié par un canal de liaison (3) au couvercle (4) du bac monobloc et qui comporte, dans le sens d'écoulement du gaz, deux espaces internes successifs, dont le premier contient des moyens pour la séparation de l'acide, tandis que le dernier comporte un dispositif pare-flammes (6) léché par le gaz déshumidifié et revêtant la forme d'une structure poreuse perméable au gaz, en métal, ou en matière synthétique sur la face de sortie du gaz de laquelle est déposée une structure métallique poreuse, le dispositif (6) comportant également comme moyen pare-flammes une chambre (7) d'extinction de flammes se raccordant à sa face de sortie du gaz.

2. Accumulateur selon la revendication 1, caractérisé en ce que, pour la séparation de l'acide, il est prévu des parois (8) éventuellement perforées, placées transversalement dans le courant de gaz et lui imposant ainsi des déviations.

3. Accumulateur selon la revendication 1, caractérisé en ce qu'il est prévu, pour la séparation de l'acide, un barboteur à liquide.

4. Accumulateur selon les revendications 2 et 3, caractérisé en ce que les parois déviant le courant de gaz sont combinées avec un barboteur à liquide.

5. Accumulateur selon une des revendications 1 à 4, caractérisé en ce que le dispositif pare-flammes est constitué par un métal fritté poreux ou un blocage de particules métalliques.

6. Accumulateur selon une des revendications 1 à 4, caractérisé en ce que le dispositif pare-flammes est constitué par une mousse métallique.

7. Accumulateur selon une des revendications 1 à 4, caractérisé en ce que le dispositif pare-flammes est constitué par un matelas de fibres métalliques.

8. Accumulateur selon une des revendications 1 à 7, caractérisé en ce qu'un détecteur de gaz pour l'indication de l'état de pleine charge est disposé à un emplacement dans le récipient (2) où le gaz s'écoulant à travers ce récipient est déjà débarrassé des particules d'acide et déshumidifié.